# EUROPEAN PATENT SPECIFICATION

(11) **EP 2 347 560 B1**
(45) Date of publication and mention of the grant of the patent: **27.08.2014**
(21) Application number: 08875180.5
(22) Date of filing: 15.10.2008
(51) Int. Cl.: H04L 29/06, H04L 12/46, H04L 29/12, H04L 12/22

(54) **SECURE ACCESS IN A COMMUNICATION NETWORK**
SICHERER ZUGANG IN EINEM KOMMUNIKATIONSNETZWERK
ACCÈS SÉCURISÉ DANS UN RÉSEAU DE COMMUNICATION

(43) Date of publication of application: 27.07.2011
(73) Proprietor: Telefonaktiebolaget L M Ericsson (PUBL), 164 83 Stockholm (SE)
(72) Inventor: KATO, Ryoji, Yokosuka Kanagawa 239-0829 (JP); ODA, Toshikane, Shibuya-ku Tokyo 150-0012 (JP); SUGIMOTO, Shinta, Kawi Kanagawa 211-0012 (JP)
(74) Representative: Suckling, Andrew Michael
(86) International application number: PCT/EP2008/063890
(87) International publication number: WO 2010/043254

(56) References cited:
- WO-A1-03/063443
- US-A1- 2005 163 078
- US-A1- 2007 094 709

## Description

### TECHNICAL FIELD

The invention relates to the field of secure access in a communication network, and in particular to secure access in a Fixed Mobile Convergence network.

### BACKGROUND

Fixed Mobile Convergence (FMC) refers to the convergence of fixed and mobile communication networks. IP-based technologies are commonly used for both fixed and mobile networks, which makes convergence easier. Using FMC, mobile and fixed network operators will be able to utilize their network resources more efficiently. For instance, when a user is running IP-based applications such as Multimedia Telephony (MMTel) and IP Television (IPTV) inside his home, it is more efficient to utilize a fixed access broadband network instead of a wireless access network, and the user will also be able to run those applications on his mobile telephone when he is away from his home.

"Proxy Mobile IPv6", IETF RFC5213. 2008-08 is an example of a network-based IP mobility management scheme in 3GPP. Network-based IP mobility management allows network operators to avoid mobility signalling over an air interface, and supports location privacy. In some situations, such as 3GPP Evolved Packet Core (EPC) networks, PMIPv6 is suitable as a mobility protocol for interfaces between network entities, such as the S2 and S5 interfaces (see "Architecture enhancements for non-3GPP Accesses", 3GPP TS 23.402, V8.2.0, 2008-06). EPC networks are the core networks for 3GPP Long Term Evolution (LTE) networks.

A key concept in FMC is that of a residential network, as this is the most commonly used fixed network access by domestic users. It is therefore necessary to connect mobile devices (or User Equipment, UE) to an EPC network through a residential network. Network-based IP mobility management must be provided for 3GPP UEs that are attached to the fixed access network. This means that any network entity (such as a Broadcast Network Gateway, BNG) inside the fixed access network needs to perform the functionality of Mobile Access Gateway (MAG) which registers the current topological location of the 3GPP UE with the mobility anchor (PDN Gateway) in the EPC.

Note that whilst the description refers to residential networks, this is by way of example, as the same concepts would apply to other types of network such as corporate networks.

"Architecture enhancements for non-3GPP Accesses", 3GPP TS 23.402, V8.2.0, 2008-06 describes two types of Non-3GPP IP Access, namely Untrusted Non-3GPP IP Access and Trusted Non-3GPP IP Access. The attachment procedure to make the UE attached to the mobile network differs for each of these IP Access networks.

Digital Subscriber Line (DSL) networks, which are a non-3GPP IP Access, can be either Untrusted or Trusted depending on the business relationship between the 3GPP and DSL network operators. Although there is currently no 3GPP specification describing an architecture of EPC using DSL networks as a non-3GPP IP Access, it is not difficult to assume that there is a possible network architecture for DSL networks as a natural extension of another non-3GPP IP Access.

A 3GPP UE, when accessing the EPC network via a residential network that utilizes a DSL network as a WAN interface, would have two different types of attachment procedure. When involving the residential network as part of a non-3GPP IP Access network, some specific problems are raised for each non-3GPP IP Access.

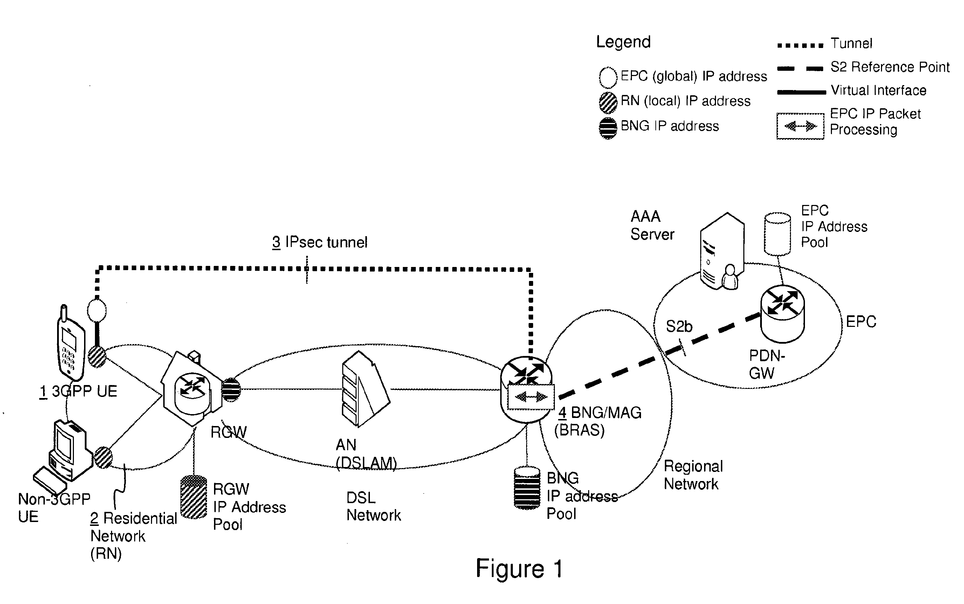

Figure 1 illustrates a possible network configuration for an untrusted Non-3GPP IP Access Network (DSL networks) in which a 3GPP UE 1 accesses from a Residential Network (RN) 2. An IPsec tunnel 3 is established between the 3GPP UE 1 and a BNG 4. As an alternative network configuration, it is possible to have BNG work as an evolved Packet Data Gateway (ePDG) and a reference point between the BNG and a Packet Data Network Gateway (PDN-GW) is S2b. The 3GPP UE 1 has two IP addresses; the RN (or local) IP address that is used for local communication within the RN 2 and as the outer IP address of the IPsec tunnel 3, and the EPC (or global) IP address that is used for global communication and as the inner IP address of IPsec tunnel 3.

These multiple IP addresses are visible to upper layer protocols such as those used by applications, which raises a general multi-homed problem. An application, when wishing to make use of the IP address of the UE 1, must somehow select which IP is address is most suitable, and whether to use the local or global IPC address. There are two main address selection issues:
- Selection of the IP source address that appears in the IP header. For local communication, the RN IP address is preferred when available. On the other hand, the preferred choice of source IP address for global communication is the EPC IP address. This issue is referred to herein as "source address selection". Note that in general, applications are not involved in the source address selection, so in this case the kernel of the OS (Operating System) selects the IP address. However in some cases, an application can control or participate in the address selection mechanism.
- Selection of proper IP address for application layer signalling. The selection is referred to herein as "Address Selection for Application Layer Signalling". An example of this is the File Transfer Protocol (FTP) in which one of the IP addresses of the 3GPP UE 1 is specified in the message body of a control-signalling message. A proper selection of the IP address should be made.

WO 03/063443 describes a mechanism for providing a terminal with secure access to a remote communication network, but does not address the problem of selecting whether to use a local or global IP address. US 2005/163078 describes pre-authentication but also does not address this problem. US 2007/094709 is concerned with dynamically assigning an address, but again does not address this problem.

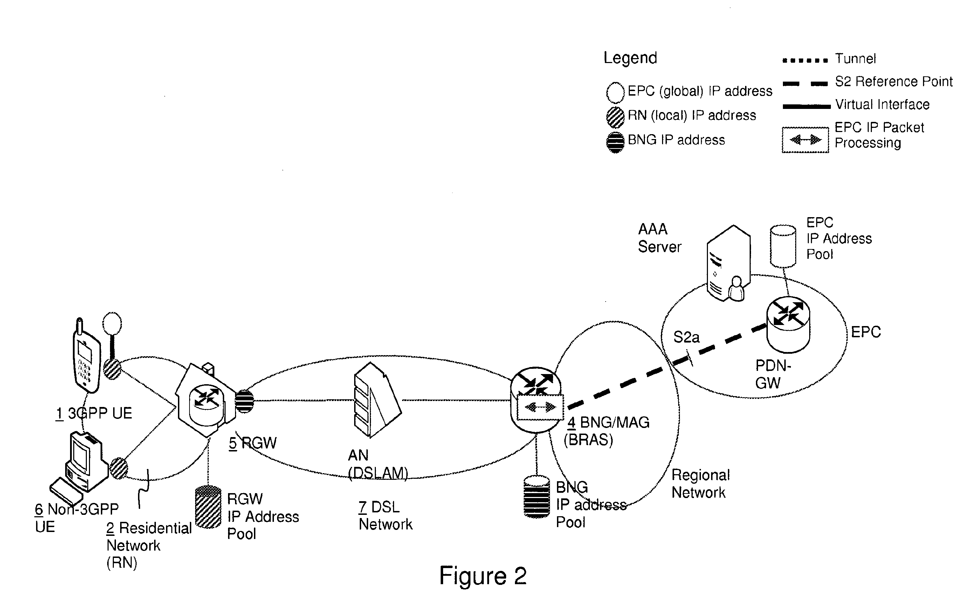

A further problem arises when a 3GPP UE 1 attempts to access a trusted non-3GPP IP Access Network (DSL networks) from the residential network 2, as illustrated in Figure 2. Only one IP address is assigned to the 3GPP UE 1, the EPC (global) IP address. The EPC address is used for both local and global communication. A Residential Gateway (RGW) 5 has a host route entry for the EPC IP address in order to enable the 3GPP UE 1 to use the EPC IP address for local communication. This means that IP packets in any local communications between the 3GPP UE 1 and a Non-3GPP UE 6 will never be routed out of the RN 2. In this case, the DSL network 7 operator is trusted by the EPC operator, and the DSL network 7 is assumed to fulfil the following two requirements.
- No one other than the owner of the access should be able to eavesdrop on, inject, modify, or block information in the DSL network 7 (Technical trust of the access)
- The owner of the DSL network 7 should be trusted not to misuse any gained information. (Business trust of the access owner)

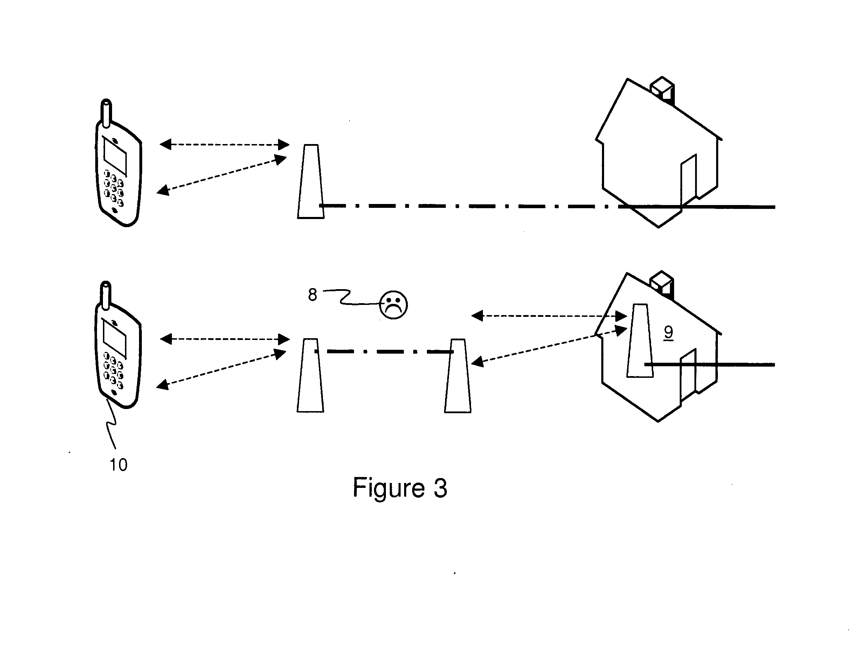

RNs are not considered to fulfil these requirements, and so, the RN should be considered as insecure. For such insecure accesses, as shown in Figure 3, it should be assumed that there is a risk of man-in-the-middle attack. A man-in-the-middle 8 can intercept packets sent in the RN between the user's home 9 and their UE 10. This allows the man-in-the-middle 8 to:
- Eavesdrop on packets between the user's home 7 and their UE 9 that are not encrypted;
- Inject or modify packets that are not integrity protected; and/or
- Block any packet.

This gives rise to risks such as incorrect charging, disclosure of confidential information, or compromising terminals and servers.

### SUMMARY

According to a first aspect of the invention, there is provided a method of providing secure access to a remote communication network via a local communication network for a terminal device. A gateway node located outside the local communication network allocates an IP address to the terminal device. The gateway node subsequently receives a request to establish a secure tunnel between the gateway node and the terminal device. It identifies the terminal device as the same terminal device to which an IP address is allocated, and allocates the same IP address for use by the terminal device as both an inner IP address and an outer IP address for packets sent via the secure tunnel. This ensures that there are no issues as described above in selecting the IP address for use in the secure tunnel, and reduces the risk of a successful man-in-the-middle attack.

Optionally, the remote communication network is an Evolved Packet Core network and the local network is a Local Area Network. As a further option, the secure tunnel is an IPsec tunnel established using an Internet Key Exchange protocol. As yet a further option, the terminal device is 3GPP User Equipment.

The method optionally comprises providing the terminal device and the gateway node with a shared secret and using that shared secret to authenticate the gateway node with the terminal device and the terminal device with the gateway node prior to establishing the IPsec tunnel.

The method optionally comprises configuring a security policy database at the terminal device such that packets to be sent to the remote communication network are sent via the secure tunnel, and packets to be sent to other nodes within the local communication network are not sent via the secure tunnel.

According to a second aspect, there is provided a gateway node for use in a communication network. The gateway node is provided with a protocol driver function for allocating an IP address to a terminal device located in a local communication network. A transmitter and receiver are provided for sending signalling establishing a secure tunnel between the terminal device and the gateway node, and the IP address is arranged to be used as both an inner and an outer IP address in the secure tunnel.

The gateway node is optionally arranged to be disposed between a fixed line network and a regional network, wherein the regional network is operatively connected to an Enhanced Packet Core network and the fixed line network is operatively connected to the local communication network.

The gateway node is optionally provided with a memory for storing a shared secret, the shared secret known also to the terminal device, and a processor for using the shared secret to authenticate the terminal device with the gateway node prior to establishing the secure tunnel.

According to a third aspect, there is provided a terminal device for use in a communication network. The terminal device is provided with a receiver for receiving an IP address allocated by a gateway node, the IP address identifying the terminal device. A protocol driver function is provided for obtaining the allocated IP address and establishing a secure tunnel between the terminal device and the gateway node, by using the same credentials for authentication in order to both obtain the allocated IP address and establish the secure tunnel. A processor is arranged to generate an IP packet for sending via the secure tunnel, and the IP packet uses the allocated IP address as both the inner and the outer IP address. A transmitter is also provided for sending the generated IP packet via the secure tunnel. Optionally, the terminal device is a 3GPP User Equipment.

As an option, the terminal device is provided with a security policy database, which includes a list of IP addresses and an indication for each IP address whether data packets addressed to that IP address are to be sent via the secure tunnel or within the local communication network. The terminal device is optionally provided with a memory for storing a shared secret. The shared secret is also known to the gateway node, and a processor is provided for using the shared secret to authenticate the gateway node with the terminal device prior to establishing the secure tunnel.

### BRIEF DESCRIPTION OF THE DRAWINGS

Figure 1 illustrates schematically in a block diagram a network for accessing a 3GPP IP network from a residential networks via an untrusted non-3GPP IP access network;
Figure 2 illustrates schematically in a block diagram a network for accessing a 3GPP IP network from a residential networks via a trusted non-3GPP IP access network;
Figure 3 illustrates schematically in a block diagram a man-in-the-middle attack;
Figure 4 illustrates schematically in a block diagram a network architecture according to an embodiment of the invention;
Figure 5 is a signalling diagram showing signalling according to an embodiment of the invention;
Figure 6 illustrates schematically in a block diagram an exemplary network architecture and IP addresses according to an embodiment of the invention;
Figure 7 is a flow diagram summarizing aspects of an embodiment of the invention;
Figure 8 illustrates schematically in a block diagram a gateway node according to an embodiment of the invention; and
Figure 9 illustrates schematically in a block diagram a 3GPP mobile device according to an embodiment of the invention.

### DETAILED DESCRIPTION

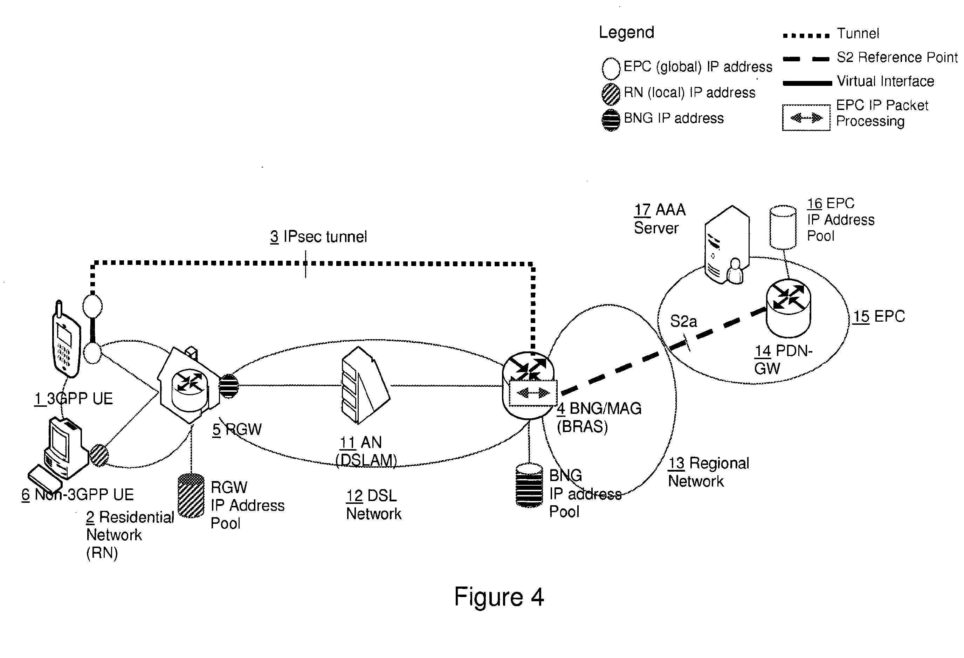

Referring to Figure 4, there is illustrated a system architecture according to an embodiment of the invention. A Residential Network (RN) 2 contains a 3GPP UE 1 and a non-3GPP UE 6. A Residential Gateway (RGW) 5 connects the RN 2 to an Access Node (AN) 11 in a DSL network 12. The AN 11 can in turn interact with a Broadcast Network Gateway (BNG) 4 in a Regional Network 13. The BNG 4 can communicate with a Packet Data Network Gateway (PDN-GW) 14 via an S2a interface. The PDN-GW 14 in the Evolved Packet Core (EPC) Network 15 communicates with a database including an EPC IP Address Pool, and indirectly with an AAA server 17 or Home Subscriber Server (HSS). An IPsec tunnel 3 is established between the 3GPP UE 1 and the BNG 4 in order to protect the global communications, and in order to address the multi-homed problem described above, the same IP address is used for both the inner and outer IP address of the IPsec tunnel 3. This requires that the 3GPP UE 1 and the BNG 4 cooperate to associate the IP address allocation session for the outer IP address (e.g. DHCP, DHCPv6) with that for the inner IP address (e.g. IKEv2) in a secure manner.

The IP address used by the 3GPP UE 1 and the IP address used any non-3GPP UEs 6 are from different IP address ranges. This scenario is herein termed a "multi-subnet" scenario. In a multi-subnet scenario, local communication is possible by an extension to the RGW 5. The RGW 5 is aware of the presence of the 3GPP UE 1 and maintains a host route. When the non-3GPP UE 6 sends an IP packet to the 3GPP UE 1, the IP packet is forwarded by the RGW 5 to the 3GPP UE. The RGW 5 also forwards IP packets from the 3GPP UE 1 to the non-3GPP UE 6. In this way, local communication between the 3GPP UE 1 and non-3GPP UE 5 is kept within the RN 2.

The IPsec tunnel 3 is established between the 3GPP UE 1 and the BNG 4 in the same way as the scenario illustrated in Figure 1. However, an important difference between the invention and the scenario illustrated in Figure 1 is that the 3GPP UE 1 shown in Figure 4 uses the same IP address (the EPC IP address) for both the inner and outer addresses of the IPsec tunnel 3. The 3GPP UE 1 therefore remains as a single-homed host. Conversely, in the scenario illustrated in Figure 1, the inner IP address of the IPsec tunnel 3 is an EPC (global) IP address (represented as the white circle), and the outer IP address is a RN (local) IP address (represented as a circle filled with diagonal lines).

By using the same IP address for both the inner and outer IP addresses, the multi-homed problem described above is addressed. Address selections by the OS and applications are properly performed because the 3GPP UE 1 is allocated a single proper IP address and can't then select an improper IP address. The 3GPP UE 1 need not implement any software, API, or functionalities to solve the multi-homed issues.

B establishing the IPsec tunnel 3 between the 3GPP UE 1 and the BNG 4, the security issue described above is addressed. The IPsec tunnel 3 mitigates most of the risk of a man-in-the-middle attack between the 3GPP UE 1 and the BNG 4.

By providing the 3GPP UE 1 with the same inner and outer IP address, and establishing an IPsec tunnel 3 between the 3GPP UE 1 and the BNG 4, the problems described above are addressed, but a new issue arises. The 3GPP UE 1 must now distinguish between two types of IP packets; packets for global communications that should be tunnelled via the IPsec tunnel 3, and packets for local communications that should not be tunnelled. The solution for this issue is described below.

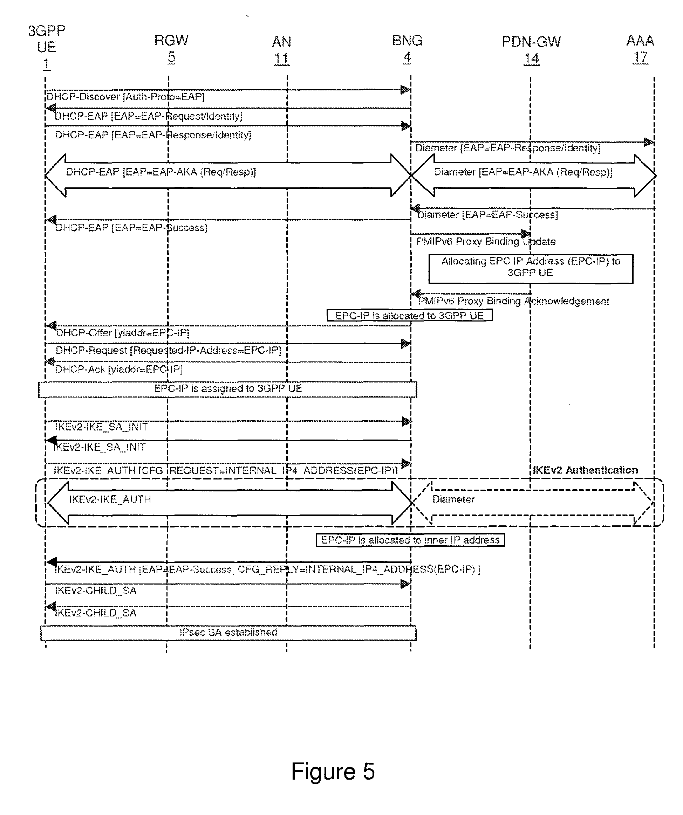

Turning now to Figure 5, there is illustrated an example signalling flow in which IP address configuration is made for the 3GPP UE 1 by the BNG 4 when the 3GPP UE 1 is initially attached to the RN 2. In the example of Figure 5, authentication is performed in conjunction with the IP address configuration of the outer IP address by DHCP Authentication Extensions (DHCP-Auth) (see "Authentication Extensions for the Dynamic Host Configuration Protocol", IETF draft-pruss-dhcp-auth-dsl-03, 2008-05-18). IP address configuration of the inner IP address is performed using IKEv2 (see "Internet Key Exchange (IKEv2) Protocol", IETF RFC4306, 2005-12).

DHCP-Auth can be used as a protocol for enabling authentication of the 3GPP UE 1 with the EPC network 15. DHCP-Auth is an extension to DHCP that enables authentication of a DHCP client in conjunction with IP address configuration. However, other authentication protocols such as 802.1x and PANA (see "Protocol for Carrying Authentication for Network Access (PANA)", IETF RFC5191, 2008-05) may be used instead. Assuming that IP address configuration is performed by DHCP, the BNG 4 serves as a DHCP Server.

IKEv2 is used by the 3GPP UE 1 and BNG 4 to establish the IPsec 3 tunnel. The BNG 4 behaves as a server (Security Gateway) and the 3GPP UE 1 behaves as a client. During the authentication phase (IKE_AUTH), the client requests allocation of an inner IP address by using Configuration Payload (CFG_REQUEST). The BNG 4 being a Security Gateway refers to an internal database in which an EPC IP address assigned to the 3GPP UE 1 is stored. Note that the internal database is also accessible by the DHCP Server component. The BNG (Security Gateway) 4 sends a response message along with the inner IP address (CFG_REPLY). Accordingly, an IPsec security association is established between the 3GPP UE 1 and the BNG 4.

In this way, IP address allocation for the 3GPP UE can be done by the DHCP Server and IKEv2 Security Gateway in a synchronized manner, i.e., the same IP address (EPC IP address) is allocated to the 3GPP UE.

There are at least two ways of authentication for the IKEv2 session, which is denoted as "IKEv2 authentication" in Figure 5 and surrounded by a dashed line. The first is EAP/AKA (see "Extensible Authentication Protocol Method for 3rd Generation Authentication and Key Agreement (EAP-AKA)", IETF RFC4187, 2006-01). Using EAP/AKA ensures that the EAP identifier of the 3GPP UE 1 is identical in both the DHCP session and the 3GPP session, and so the BNG 4 can confirm the association of the DHCP and IKEv2 session in secure manner provided that the source IP address of the IKEv2 session and the IP address assigned by the DHCP are the same, and the EAP identifier of the DHCP session and the IKEv2 session are the same.

This implies that two AKA sessions run simultaneously between the 3GPP UE (USIM) 1 and the AAA Server (HSS) 17, and so both the 3GPP UE 1 and the AAA Server 17 must handle two simultaneous AKA sessions for a single IMSI independently (e.g. fast re-authentication, authentication vector, sequence number etc).

EAP Key Management Framework (see "Extensible Authentication Protocol (EAP) Key Management Framework", IETF RFC5247, 2008-08) enables the EAP backend authentication server (the AAA Server 17 in the example of Figure 4) to distribute keying material to both the EAP authenticator (in this scenario, the BNG 4) and the EAP peer (in this scenario the 3GPP UE 1). By using this framework during a DHCP session, the 3GPP UE 1 and the BNG 4 can share a secret key before an IKEv2 session starts. The IKEv2 session can be authenticated by using this shared secret key. If the 3GPP UE 1 uses the IP address assigned by DHCP as an identifier for the IKEv2 session, the BNG 4 can confirm the association of the DHCP and IKEv2 session in a secure manner.

The invention provides for dynamic configuration of a Security Policy Database (SPD) for enabling local communications within the RN 2. The SPD at the 3GPP UE 1 is dynamically configured based on IPv4 ICMP messages or IPv6 router advertisement messages sent by the RGW 5. Note that a SPD on the BNG 4 is also configured, which is a normal behaviour for an IPsec Security Gateway.

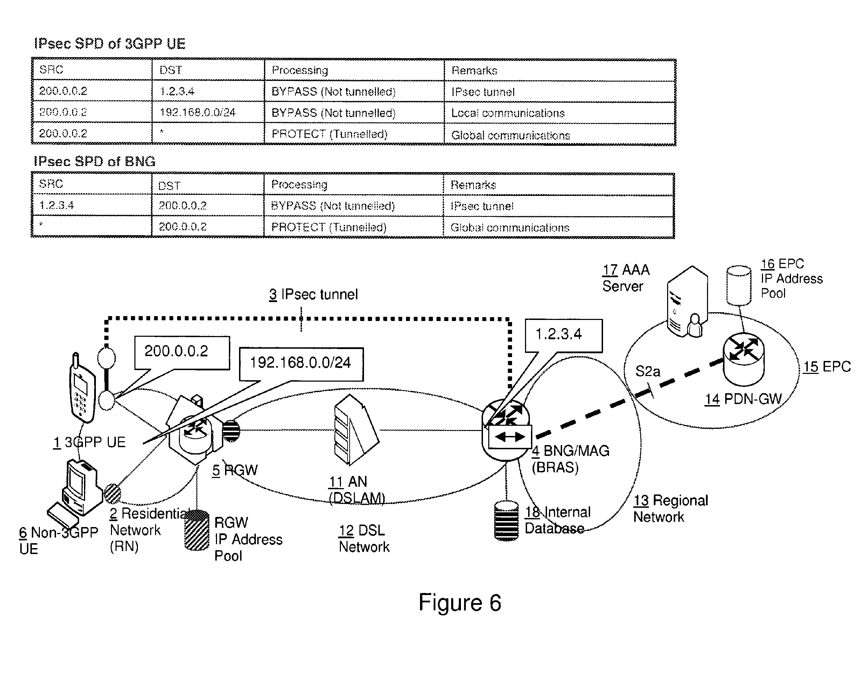

Figure 6 illustrates an example of a network configuration and SPD configuration for the 3GPP UE 1 and the BNG 4. In this example, the IP address of the 3GPP UE 1 is 200.0.0.2 and that of the BNG is 1.2.3.4. The network prefix of the RN 2 is 192.168.0.0/24.

The IPsec tunnel 3 does not itself need to be tunnelled, and so traffic between 200.0.0.2 (the 3GPP UE 1) and 1.2.3.4 (the BNG 4) is marked as 'BYPASS' on both IPsec SPDs shown in the tables in Figure 6.

Uplink packets for global communications are identified by source IP address 200.0.0.2 in the IPsec SPD of the 3GPP UE 1 and downlink packets for global communications are identified by a destination IP address 200.0.0.2 in the IPsec SPD of the BNG 4, and so this traffic is marked as 'PROTECT' which indicates that IPsec protection of the traffic is required.

IP packets for local communications (e.g., UPnP communication between the 3GPP UE 1 and the non-3GPP UE 6) do not need to be tunnelled, and so are marked as 'BYPASS' in the IPsec SPD of the 3GPP UE 1. As shown in Figure 6, packets whose source IP address is 200.0.0.2 (the 3GPP UE 1) and destination IP address (prefix) is 192.168.0.0/24 (the RN 2) are marked as 'BYPASS' in the IPsec SPD of the 3GPP UE 1. For this configuration, 3GPP UE 1 must know the network address (prefix) of the RN 2. This can be done for IPv4 and IPv6 separately.

For IPv4, the 3GPP UE 1 gets to know the network prefix of the RN 2 by using ICMP Address Mask Request/Reply (see "Internet Standard Subnetting Procedure", IETF RFC950, 1985-08) without having a local IP address assigned. The 3GPP UE 1 sends an ICMP Address Mask Request message to the broadcast address 255.255.255.255 from the unspecified source address (0.0.0.0), and the RGW 5 responds with the subnet mask in the payload and its IP address in the source IP address of the IP header. The 3GPP UE 1 then adds a new IPsec SPD entry for the network prefix of the Residential Network.

For IPv6, the 3GPP UE 1 sends a Router Solicitation message to the RGW 5 and receives a Router Advertisement message from the RGW 5 that contains the IPv6 prefix(es) assigned to the RN 2. When the 3GPP UE 1 receives a Router Advertisement message, it does not perform IP address auto-configuration based on the Router Advertisement message. Note that the 3GPP UE 1 updates its IPsec SPD according to the Router Advertisement message in order to make local communications work. The 3GPP UE 1 extracts the IPv6 prefix(es) from the Prefix Information option in the Router Advertisement message and inserts a new SPD entry, which suggest exceptional packet processing for user traffic inside the RN 2. In this way, the 3GPP UE 1 can take part in local communications.

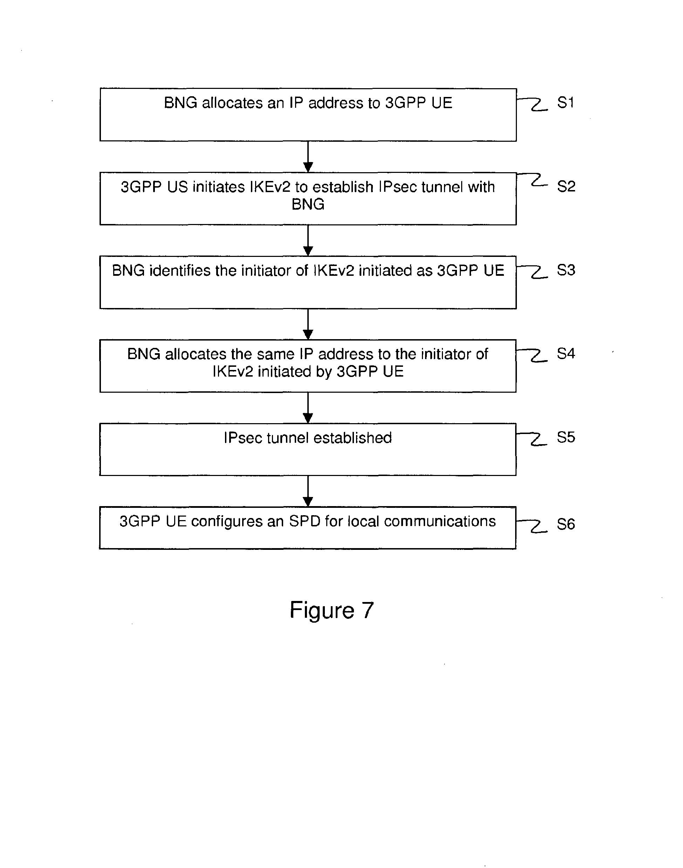

Figure 7 summarises aspects of the invention, with the corresponding to the numbering shown in Figure 7:
S1. The BNG allocates an EPC IP address to the 3GPP UE;
S2. The 3GPP UE initiates IKEv2 to establish the IPsec tunnel with the BNG;
S3. During establishing the IPsec tunnel by IKEv2, the BNG identifies the initiator of IKEv2 as the 3GPP UE to which the EPC IP address is allocated in S1;
S4. During establishing the IPsec tunnel by IKEv2, the BNG allocates the same EPC IP address to the initiator of IKEv2 for the inner IP address of the IPsec tunnel if the initiator of IKEv2 is identified as the 3GPP UE to which the EPC IP address is allocated in S1;
S5. The IPsec tunnel is established between the 3GPP UE and the BNG. The allocated EPC IP address is used for both the inner and outer IP address of the IPsec tunnel;
S6. The 3GPP UE configures the SPD of the IPsec tunnel for local communications by using IPv4 ICMP and IPv6 router advertisement.

The steps need not be carried out in the order shown above.

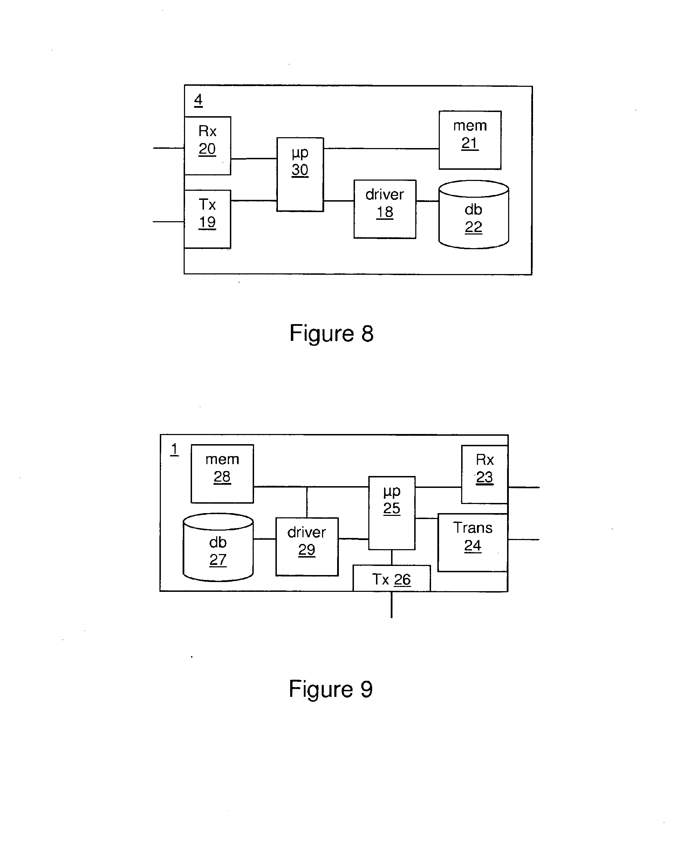

Turning now to Figure 8, a BNG 4 is provided with a protocol driver 18 and a processor 30 for allocating an IP address to the 3GPP UE 1. A transmitter 19 and receiver 20 are provided for establishing an IPsec tunnel 3 between the 3GPP UE 1 and the BNG 4. A memory 21 may be provided for storing a shared secret to be used in authentication processes. Furthermore, a database 22 may be provided that stores IP addresses together with an indication of whether to send packets addressed to each IP address via the IPsec tunnel.

With reference to Figure 9, a 3GPP UE 1 is provided with a receiver 23 for receiving the IP address allocated by the BNG 4. A protocol driver function 29 is provided for establishing an IPsec tunnel between the 3GPP UE 1 and the BNG 4 using the same credentials for authentication in order to both obtain the allocated IP address and establish the IPsec tunnel. Means such as a transceiver 24, or transmitter and receiver are also provided for establishing the IPsec tunnel 3 between the 3GP P UE 1 and the BNG 4. A processor 25 is provided for generating an IP packet for sending via the IPsec tunnel 3, the IP packet using the allocated IP address as both the inner and the outer IP address, and a transmitter 26 is provided for sending the generated IP packet via the IPsec tunnel 3. The 3GPP UE 1 may also comprise a SDB 27, as described above. A memory 28 may also be provided for storing a shared secret to be used in authentication processes between the 3GPP UE 1 and the BNG 4.

This invention allows 3GPP UE users to access 3GPP mobile networks and services via a fixed broadband access networks in such a way that applications running on the 3GPP UE do not need to deal with IP address selection, the risk of man-in-the-middle attacks is reduced, and no additional complexity is required for RGWs to residential networks.

The following abbreviations have been used in this description:
- 3GPP UE: 3GPP User Equipment
- AN: Access Node
- BNG: Broadband Network Gateway
- DSL: Digital Subscriber Line
- EPC: Enhanced Packet Core
- ePDG: Evolved Packet Data Gateway
- FMC: Fixed Mobile Convergence
- MAG: Mobile Access Gateway
- PDN: Packet Data Network
- RGW: Residential Gateway
- RN: Residential Network
- SPD: Security Policy Database

It will be appreciated by the person of skill in the art that various modifications may be made to the above-described embodiments without departing from the scope of the present invention.

## Claims

1. A method of providing secure access to a remote communication network via a local communication network for a terminal device, the method **characterized by**:
at a gateway node (4) located outside the local communication network, allocating (S1) an IP address to the terminal device (1);
receiving (S2) a request to establish a secure tunnel between the gateway node (4) and the terminal device (1);
identifying (S3) the terminal device (1) as the same terminal device (1) to which an IP address is allocated;
allocating (S4) the same IP address for use by the terminal device (1) as both an inner IP address and an outer IP address for packets sent via the secure tunnel.

2. The method according to claim 1, wherein the remote communication network is an Evolved Packet Core network and the local network is a Local Area Network.

3. The method according to claim 1 or 2, wherein the secure tunnel is an IPsec tunnel established using an Internet Key Exchange protocol.

4. The method according to claim 3, further comprising:
providing the terminal device and the gateway node with a shared secret; and
using the shared secret to authenticate the gateway node with the terminal device and the terminal device with the gateway node prior to establishing the IPsec tunnel.

5. The method according to any one of claims 1 to 4, further comprising configuring a security policy database at the terminal device such that packets to be sent to the remote communication network are sent via the secure tunnel, and packets to be sent to other nodes within the local communication network are not sent via the secure tunnel.

6. The method according to any one of claims 1 to 5, wherein the terminal device (1) is 3GPP User Equipment.

7. A gateway node (4) for use in a communication network, the gateway node (4) **characterized by**:
a protocol driver function (18) for allocating an IP address to a terminal device (1) located in a local communication network;
a transmitter (19) and receiver (20) for exchanging signalling establishing a secure tunnel between the terminal device (1) and the gateway node (2), wherein the IP address is arranged to be used as both an inner and an outer IP address in the secure tunnel.

8. The gateway node (4) according to claim 7, wherein the gateway node (4) is arranged to be disposed between a fixed line network and a regional network, wherein the regional network is operatively connected to an Enhanced Packet Core network and the fixed line network is operatively connected to the local communication network.

9. The gateway node (4) according to claim 7 or 8, further comprising a memory (21) for storing a shared secret, the shared secret known also to the terminal device (1), and a processor (30) for using the shared secret to authenticate the terminal device with the gateway node prior to establishing the secure tunnel.

10. A terminal device (1) for use in a communication network, the terminal device (1) **characterized by**:
a receiver (23) for receiving an IP address allocated by a gateway node (4), the IP address identifying the terminal device (1);
a protocol driver (29) for obtaining the allocated IP address and establishing a secure tunnel between the terminal device (1) and the gateway node (4), by using the same credentials for authentication in order to both obtain the allocated IP address and establish the secure tunnel;
a processor (25) for generating an IP packet for sending via the secure tunnel, the IP packet using the allocated IP address as both the inner and the outer IP address; and
a transmitter (26) for sending the generated IP packet via the secure tunnel.

11. The terminal device (1) according to claim 10, wherein the terminal device (1) is a 3GPP User Equipment.

12. The terminal device (1) according to claim 10 or 11, further comprising a security policy database (22), the database including a list of IP addresses and an indication for each IP address whether data packets addressed to that IP address are to be sent via the secure tunnel or within the local communication network.

13. The terminal device (1) according to claim 10, 11 or 12, further comprising a memory (28) for storing a shared secret, the shared secret known also to the gateway node, and a processor for using the shared secret to authenticate the gateway node (4) with the terminal device (1) prior to establishing the secure tunnel.

## Patentansprüche

1. Verfahren zum Bereitstellen von sicherem Zugang zu einem entfernten Kommunikationsnetz über ein lokales Kommunikationsnetz für ein Endgerät, wobei das Verfahren wie folgt gekennzeichnet ist:
an einem Gateway-Knoten (4), der außerhalb des lokalen Kommunikationsnetzes angeordnet ist, dem Endgerät (1) eine IP-Adresse zuordnen (S1);
Empfangen (S2) einer Anforderung, einen sicheren Tunnel zwischen dem Gateway-Knoten (4) und dem Endgerät (1) aufzubauen;
Identifizieren (S3) des Endgeräts (1) als dasselbe Endgerät (1), dem eine IP-Adresse zugewiesen worden ist;
Zuweisen (S4) derselben IP-Adresse zur Verwendung durch das Endgerät (1) sowohl als eine innere IP-Adresse als auch als eine äußere IP-Adresse für Pakete, die über den sicheren Tunnel gesendet werden.

2. Verfahren nach Anspruch 1, worin das entfernte Kommunikationsnetz ein EPC(entwickelter Paketkern)-Netz ist und das lokale Netz ein LAN ist.

3. Verfahren nach Anspruch 1 oder 2, worin der sichere Tunnel ein IPsec-Tunnel ist, der unter Verwendung eines IKE(Internet-Schlüsselaustausch)-Protokolls aufgebaut wird.

4. Verfahren nach Anspruch 3, außerdem umfassend:
dem Endgerät und dem Gateway-Knoten ein gemeinsames Geheimnis bereitstellen; und
Verwenden des gemeinsamen Geheimnisses, um den Gateway-Knoten mit dem Endgerät und das Endgerät mit dem Gateway-Knoten zu authentifizieren, bevor der IPsec-Tunnel aufgebaut wird.

5. Verfahren nach einem der Ansprüche 1 bis 4, außerdem umfassend, dass eine Sicherheitspolicy-Datenbank an dem Endgerät konfiguriert wird, sodass an das entfernte Kommunikationsnetz zu sendende Pakete über den sicheren Tunnel gesendet werden und an andere Knoten innerhalb des lokalen Kommunikationsnetzes zu sendende Pakete nicht über den sicheren Tunnel gesendet werden.

6. Verfahren nach einem der Ansprüche 1 bis 5, worin das Endgerät (1) ein 3GPP-Benutzergerät ist.

7. Gateway-Knoten (4) zur Verwendung in einem Kommunikationsnetz, wobei der Gateway-Knoten (4) **gekennzeichnet ist durch**:
eine Protokolltreiberfunktion (18) zum Zuweisen einer IP-Adresse an ein Endgerät (1), das in einem lokalen Kommunikationsnetz angeordnet ist;
einen Sender (19) und Empfänger (20) zum Austauschen von Signalisierung, die einen sicheren Tunnel zwischen dem Endgerät (1) und dem Gateway-Knoten (2) schaffen, worin die IP-Adresse dazu angeordnet ist, sowohl als eine innere als auch eine äußere IP-Adresse im sicheren Tunnel verwendet zu werden.

8. Gateway-Knoten (4) nach Anspruch 7, worin der Gateway-Knoten (4) angeordnet ist, um zwischen einem Festverbindungsnetz und einem regionalen Netz positioniert zu sein, worin das regionale Netz betriebsfähig an ein EPC-Netz angeschlossen ist und das Festverbindungsnetz betriebsfähig an das lokale Kommunikationsnetz angeschlossen ist.

9. Gateway-Knoten (4) nach Anspruch 7 oder 8, außerdem einen Speicher (21) zum Speichern eines gemeinsamen Geheimnisses, wobei das gemeinsame Geheimnis auch dem Endgerät (1) bekannt ist, und einen Prozessor (30) zur Verwendung des gemeinsamen Geheimnisses umfassend, um das Endgerät mit dem Gateway-Knoten zu authentifizieren, bevor der sicher Tunnel aufgebaut wird.

10. Endgerät (1) zur Verwendung in einem Kommunikationsnetz, wobei das Endgerät (1) **gekennzeichnet ist durch**:
einen Empfänger (23) zum Empfangen einer IP-Adresse, die **durch** einen Gateway-Knoten (4) zugewiesen wird, wobei die IP-Adresse das Endgerät (1) identifiziert;
einen Protokolltreiber (29), um die zugewiesene IP-Adresse zu erhalten und einen sicheren Tunnel zwischen dem Endgerät (1) und dem Gateway-Knoten (4) aufzubauen, indem dieselben Credentials zur Authentifizierung verwendet werden, um sowohl die zugewiesene IP-Adresse zu erhalten als auch den sicheren Tunnel aufzubauen;
einen Prozessor (25) zum Erzeugen eines IP-Pakets zum Senden über den sicheren Tunnel, wobei das IP-Paket die zugewiesene IP-Adresse sowohl als die innere als auch als die äußere IP-Adresse verwendet; und
einen Sender (26) zum Senden des erzeugten IP-Pakets über den sicheren Tunnel.

11. Endgerät (1) nach Anspruch 10, worin das Endgerät (1) ein 3GPP-Benutzergerät ist.

12. Endgerät (1) nach Anspruch 10 oder 11, außerdem eine Sicherheitspolicy-Datenbank (22) umfassend, wobei die Datenbank eine Liste von IP-Adressen und eine Anzeige für jede IP-Adresse einschließt, ob an diese IP-Adresse adressierte Datenpakete über den sicheren Tunnel oder innerhalb des lokalen Kommunikationsnetzes zu senden sind.

13. Endgerät (1) nach Anspruch 10, 11 oder 12, außerdem einen Speicher (28) zum Speichern eines gemeinsamen Geheimnisses, wobei das gemeinsame Geheimnis auch dem Gateway-Knoten bekannt ist, und einen Prozessor zum Verwenden des gemeinsamen Geheimnisses umfassend, um den Gateway-Knoten (4) mit dem Endgerät (1) zu authentifizieren, bevor der sichere Tunnel aufgebaut wird.

## Revendications

1. Procédé de fourniture d'un accès sécurisé à un réseau de communication distant, par l'intermédiaire d'un réseau de communication local, pour un dispositif terminal, le procédé étant **caractérisé en ce qu'**il consiste à :
au niveau d'un noeud de passerelle (4) situé en dehors du réseau de communication local, affecter (S1) une adresse IP au dispositif terminal (1) ;
recevoir (S2) une demande d'établissement d'un tunnel sécurisé entre le noeud de passerelle (4) et le dispositif terminal (1) ;
identifier (S3) le dispositif terminal (1) comme étant le même dispositif terminal (1) que celui auquel est allouée une adresse IP ;
affecter (S4) la même adresse IP, devant être utilisée par le dispositif terminal (1), à la fois en qualité d'adresse IP interne et d'adresse IP externe pour des paquets envoyés par le biais du tunnel sécurisé.

2. Procédé selon la revendication 1, dans lequel le réseau de communication distant est un réseau central évolué en mode paquets et le réseau local est un réseau LAN.

3. Procédé selon la revendication 1 ou 2, dans lequel le tunnel sécurisé est un tunnel IPsec établi en utilisant un protocole d'échange de clés Internet.

4. Procédé selon la revendication 3, consistant en outre à :
fournir au dispositif terminal et au noeud de passerelle un secret partagé ; et
utiliser le secret partagé en vue d'authentifier le noeud de passerelle avec le dispositif terminal, et le dispositif terminal avec le noeud de passerelle, avant d'établir le tunnel IPsec.

5. Procédé selon l'une quelconque des revendications 1 à 4, consistant en outre à configurer une base de données de règles de sécurité au niveau du dispositif terminal, de sorte que des paquets devant être envoyés au réseau de communication distant sont envoyés par l'intermédiaire du tunnel sécurisé, et que des paquets devant être envoyés à d'autres noeuds au sein du réseau de communication local ne sont pas envoyés par l'intermédiaire du tunnel sécurisé.

6. Procédé selon l'une quelconque des revendications 1 à 5, dans lequel le dispositif terminal (1) est un équipement d'utilisateur 3GPP.

7. Noeud de passerelle (4) destiné à être utilisé dans un réseau de communication, le noeud de passerelle (4) étant **caractérisé par** :
une fonction de pilote de protocoles (18) destinée à affecter une adresse IP à un dispositif terminal (1) situé dans un réseau de communication local ;
un émetteur (19) et un récepteur (20), pour un échange de signalisation, établissant un tunnel sécurisé entre le dispositif terminal (1) et le noeud de passerelle (2), dans lequel l'adresse IP est agencée de manière à être utilisée à la fois en qualité d'adresse IP interne et d'adresse IP externe dans le tunnel sécurisé.

8. Noeud de passerelle (4) selon la revendication 7, dans lequel le noeud de passerelle (4) est agencé de manière à être disposé entre un réseau de téléphonie fixe et un réseau régional, dans lequel le réseau régional est connecté fonctionnellement à un réseau central évolué en mode paquets et le réseau de téléphonie fixe est connecté fonctionnellement au réseau de communication local.

9. Noeud de passerelle (4) selon la revendication 7 ou 8, comprenant en outre une mémoire (21) destinée à stocker un secret partagé, le secret partagé étant également connu du dispositif terminal (1), et un processeur (30) destiné à utiliser le secret partagé en vue d'authentifier le dispositif terminal avec le noeud de passerelle avant d'établir le tunnel sécurisé.

10. Dispositif terminal (1) destiné à être utilisé dans un réseau de communication, le dispositif terminal (1) étant **caractérisé par** :
un récepteur (23) destiné à recevoir une adresse IP affectée par un noeud de passerelle (4), l'adresse IP identifiant le dispositif terminal (1) ;
un pilote de protocoles (29) destiné à obtenir l'adresse IP affectée, et à établir un tunnel sécurisé entre le dispositif terminal (1) et le noeud de passerelle (4), en utilisant les mêmes informations d'identification en vue d'une authentification, à la fois afin d'obtenir l'adresse IP affectée et d'établir le tunnel sécurisé ;
un processeur (25) destiné à générer un paquet IP à envoyer par le biais du tunnel sécurisé, le paquet IP utilisant l'adresse IP affectée à la fois en qualité d'adresse IP interne et d'adresse IP externe ; et
un émetteur (26) destiné à envoyer le paquet IP généré par le biais du tunnel sécurisé.

11. Dispositif terminal (1) selon la revendication 10, dans lequel le dispositif terminal (1) est un équipement d'utilisateur 3GPP.

12. Dispositif terminal (1) selon la revendication 10 ou 11, comprenant en outre une base de données de règles de sécurité (22), la base de données incluant une liste d'adresses IP et une indication, pour chaque adresse IP, indiquant si les paquets de données adressés à cette adresse IP doivent être envoyés par l'intermédiaire du tunnel sécurisé ou au sein du réseau de communication local.

13. Dispositif terminal (1) selon la revendication 10, 11 ou 12, comprenant en outre une mémoire (28) destinée à stocker un secret partagé, le secret partagé étant également connu du noeud de passerelle, et un processeur destiné à utiliser le secret partagé en vue d'authentifier le noeud de passerelle (4) avec le dispositif terminal (1) avant d'établir le tunnel sécurisé.
